# EUROPEAN PATENT APPLICATION

(11) **EP 4 044 464 A1**
(43) Date of publication of application: **17.08.2022**
(21) Application number: 20837917.2
(22) Date of filing: 21.12.2020
(51) Int. Cl.: H04H 20/74, H04H 20/51, H04H 20/59, H04N 7/22, H04N 21/6405, G06F 3/16, H01Q 1/24

(54) **APPARATUS COMPRISING SMART SATELLITE ANTENNA, CAPABLE OF PERFORMING MULTICASTING AND MULTISENSING-BASED EMERGENCY SITUATION DETECTION, AND OPERATING METHOD THEREFOR**

(71) Applicant: Falcon Co., Ltd., Dalseo-gu Daegu 42716 (KR)
(72) Inventor: PARK, Dong Kwon, Gangseo-gu Busan 46769 (KR)
(74) Representative: Botti, Mario
(86) International application number: PCT/KR2020/018835
(87) International publication number: WO 2022/138998

(57) **Abstract**

Disclosed herein is a smart satellite antenna apparatus including a satellite tracking antenna. The smart satellite antenna apparatus includes a controller that receives a command to select a channel of a satellite broadcast from a user and controls the movement and rotation of the satellite tracking antenna corresponding to the channel of the satellite broadcast. The controller transfers satellite broadcast content, received corresponding to the channel, via a wired link so that the satellite broadcast content is displayed on a display device, sets up a multicasting network based on wireless links so that the satellite broadcast content is displayed on a plurality of wireless devices other than the display device via the wireless links, and manages the multicasting network so that the satellite broadcast content is transferred to each of the plurality of wireless devices via the multicasting network and the satellite broadcast content is shared among the display device and the plurality of wireless devices.

## Description

### Technical Field

The present invention relates to an apparatus including a satellite antenna and an operation method thereof. More specifically, the present invention relates to an apparatus including an outdoor smart satellite antenna that can receive a satellite broadcast and conveniently provide it to a user in an outdoor site such as a car, a camping car, or a yacht, and also relates to an operating method thereof.

### Background Art

In a broadcasting satellite (BS) system, a satellite relays broadcast signals transmitted by a terrestrial broadcasting station, and a user receives and uses the broadcast signals using a terrestrial satellite antenna and a satellite broadcast receiver.

In order to search for a channel desired to be viewed by a user, only the process of tuning to the frequency of the wired/wireless channel is insufficient, and it is necessary to move or rotate the satellite antenna while targeting the satellite antenna to a satellite transmitting the desired channel through the motorizing of the satellite antenna, unlike in a general TV receiver. In general, satellite antennas are directional antennas.

The process in which a satellite broadcast receiver motorizes a satellite antenna to search for and view a satellite channel desired to be viewed by a user is disclosed in Korean Patent Application Publication No. 10-2015-0043876 entitled "Satellite Channel Search Method and Device."

The satellite antenna disclosed in the prior art document Korean Patent Application Publication No. 10-2015-0043876 is manufactured on the assumption that it will be used in a specific area on the earth. Since the number of satellites that can be viewed in a specific area on the earth is limited, the movement and rotation of the satellite antenna is performed within a very limited range in Korean Patent Application Publication No. 10-2015-0043876 and the like.

Meanwhile, in recent years, people today want to enjoy various leisure activities. As one of the ways to enjoy leisure, outdoor camping and leisure activities are in the spotlight. In such a space, it may be difficult to view normal terrestrial broadcasts. Accordingly, there is an increasing demand for satellite broadcast receivers capable of viewing satellite broadcasts in such outdoor sites.

By the way, outdoor satellite broadcast receivers cannot meet various demands if they are manufactured on the assumption that they are used only in specific regions on the earth. Therefore, the movement and rotation of satellite antennas in a wider range must be guaranteed. To this end, the present applicant has proposed Korean Patent No. 10-2031250 entitled "Satellite and Terrestrial Wave Reception Automatic Tracking Antenna having 360-degree Azimuth Rotation Structure."

A display control technology using voice recognition has recently been proposed to assist a user in conveniently selecting a channel and viewing broadcast content in a broadcast reception and display apparatus. As examples thereof, there may be cited Korean Patent Application Publication No. 10-2017-0087712 entitled "Display Device and Method of Controlling Display Device" and U.S. Patent No. 10,779,030 entitled "Display Apparatus and Controlling Method Thereof."

However, in outdoor sites, a radio wave environment is poor and the computing power or power supply is insufficient, unlike in general urban facilities or homes. Therefore, in consideration of this point, attempts to improve and optimize a technology for providing user convenience via voice recognition for outdoor sites need to be continued.

Meanwhile, in recent years, with the development of wireless communication technology, smart devices are brought to outdoor sites in most cases. Accordingly, there is a demand for a technology capable of sharing satellite broadcast content in a nearby wireless or smart device using a wireless communication technology.

In Korean Patent Application Publication No. 10-2018-0109340 entitled "Electronic Device and Screen Sharing Method of Electronic Device" and U.S. Patent Application Publication No. 2020/0057589 entitled "Electronic Device and Screen Sharing Method of Electronic Device," there is disclosed a technology for pairing two devices having different screen sizes and allowing content displayed on a screen to be shared via a wireless channel.

However, Korean Patent Application Publication No. 10-2018-0109340 and U.S. Patent Application Publication No. 2020/0057589 focus on computing that adjusts image data while taking into consideration the different screen sizes of devices. Accordingly, it is a technology that consumes a considerable amount of computing power and is difficult to apply as it is in an outdoor site where available computing power is limited.

Meanwhile, in Korean Patent No. 10-2139107 entitled "Broadcast Data Mirroring Service Provision System and Method for Smart TV and Smartphone for Receiving Multi-Channel Broadcast Signals," there is proposed a service in which a set-top box that receives multi-channel broadcast signals mirrors the broadcast data of a smart TV and a smartphone.

However, the technology of Korean Patent No. 10-2139107 is configured to MPEG-encode broadcast content, MPEG-encoded for IPTV or smart TV, downloaded in advance, and then MPEG-decoded and stored in a set-top box, into a different screen specification for a smartphone and then provide the encoded broadcast content to a smartphone in practice. Accordingly, it is difficult for this technology to meet the demand to simultaneously provide real-time broadcast content. The technology of Korean Patent No. 10-2139107 consumes a lot of computing power during MPEG encoding, and thus, has a problem in that a set-top box must contain storage having a large storage space for this purpose.

Meanwhile, another demand required in outdoor sites is a demand for a communication apparatus that detects an emergency situation and issues an alarm or rescue request upon detection of the emergency situation in order to make a rapid and appropriate response when, for example, an unexpected event or accident occurs.

In general, urban facilities or homes have sufficient power and communication facilities, and also have relief measures to respond to incidents and accidents. In contrast, in outdoor sites, the ability to respond to the same incidents and accidents is inevitably weak.

In response to this demand, the present applicant has proposed Korean Patent No. 10-1879254 entitled "Satellite Broadcast Reception TV that Detects Accident and Generates Alarm."

However, attempts to further improve and optimize the process of detecting and responding to emergency situations in outdoor sites while taking into consideration user convenience need to be continued.

### Disclosure

### Technical Problem

Although there are a number of prior art documents regarding general satellite broadcast reception apparatuses, the general satellite broadcast reception apparatuses are proposed on the assumption that they are installed on fixed facilities or buildings. Prior art satellite broadcast reception apparatuses are not limited in terms of size or weight, and generally include a large satellite antenna and a set-top box (STB) that assists the satellite antenna. Since the prior art satellite broadcast reception apparatuses are not limited in terms of size or weight, a prerequisite for the prior art satellite broadcast reception apparatuses is an environment without any significant obstacle in using a set-top box having strong computing power or large storage capacity. In addition, most of the prior art are based on the assumption that power is smoothly supplied and content other than a satellite broadcast is smoothly supplied via wireless/wired communication.

The present invention is different from the prior art, is directed to a movable smart satellite antenna apparatus installed on a vehicle such as a camping car or a ship such as a yacht, and may propose an apparatus including a satellite antenna and a controller for controlling the driving of the satellite antenna.

An object of the present invention is to propose a movable smart satellite antenna apparatus, i.e., a technology capable of conveniently receiving a satellite broadcast even in an environment where it is difficult to separately install a large and heavy set-top box, such as an outdoor site.

The present invention is an invention intended to solve the problems of the conventional art and the above-described prior art, and an object of the present invention is to implement a multicasting network that assists users to share a satellite broadcast through a plurality of smart terminals as well as a TV by using the limited computing power of a controller in an environment where it is difficult for the users to access other broadcast content, e.g., in an outdoor site or at sea.

An object of the present invention is to implement a multicasting network that assists users to share a satellite broadcast through a plurality of smart terminals as well as a TV by controlling wireless networks while using the limited computing power of a controller in an environment where it is difficult for the users to access other wireless networks, e.g., in an outdoor site or at sea.

An object of the present invention is to enable the dynamic setting of multicasting with a wireless terminal and the dynamic designation of a multicasting target terminal in an outdoor site independently of a satellite and/or broadcast provider, and to provide an efficient multicasting network for these purposes.

An object of the present invention is to provide an efficient multicasting network in order to minimize a time difference between the broadcast channel content displayed on a TV and a shared screen displayed on a wireless terminal.

A technology that can detect various emergency situations that may occur in an outdoor site and provide a disaster-related satellite broadcast to a user has been disclosed through the prior art document, i.e., Korean Patent No. 10-1879254 entitled "Satellite Broadcast Reception TV that Detects Accident and Generates Alarm."

However, even when a multi-sensing technology is applied, there is a demand for a technology that advances criteria for determining whether a situation indicated by sensed information actually meets the definition of an emergency situation.

The present invention is an invention intended to solve the problems of the conventional art and the above-described prior art, and an object of the present invention is to propose an emergency situation detection technology that applies a technology capable of recognizing a pattern and extracting context information from audio/sound in addition to a prior art speech recognition technology, thereby enhancing the ability to determine an emergency situation by using cross-check between multi-sensing information and voice-sound recognition information and additionally determining the urgency of the emergency situation.

### Technical Solution

The present invention has been conceived to achieve the above-described object. A smart satellite antenna apparatus according to an embodiment of the present invention includes a satellite tracking antenna and a controller. The controller receives a command to select a channel of a satellite broadcast from a user, and controls the movement and rotation of the satellite tracking antenna corresponding to the channel of the satellite broadcast. The controller transfers satellite broadcast content, received corresponding to the channel, via a wired link so that the satellite broadcast content is displayed on a display device, sets up a multicasting network based on wireless links so that the satellite broadcast content is displayed on a plurality of wireless devices other than the display device via the wireless links, and manages the multicasting network so that the satellite broadcast content is transferred to each of the plurality of wireless devices via the multicasting network and the satellite broadcast content is shared among the display device and the plurality of wireless devices.

The controller may adaptively determine whether to set up the multicasting network and perform the designation of a plurality of wireless devices as multicasting targets based on the interaction with the user.

The controller may recognize a plurality of wireless devices, and set at least some of the plurality of wireless devices as one group. The controller may set up a multicasting network assigning the identical(or common) bandwidth for a plurality of group wireless devices included in the one group. The controller may manage the multicasting network so that the plurality of group wireless devices share the multicasting network and receive the satellite broadcast content.

The controller may adjust the timing condition of a data stream transmitted to at least one of the display device and the plurality of wireless devices so that a difference between the times at which the satellite broadcast content is played on the display device and the plurality of wireless devices falls within a reference value.

The controller may extract a command keyword from a voice command of the user based on an artificial intelligence speech recognition technology. The controller may control an auto-tracking operation of the satellite tracking antenna corresponding to the channel of the satellite broadcast based on the command keyword. The controller may automatically determine whether to set up the multicasting network and perform the designation of a plurality of wireless devices as multicasting targets based on the command keyword.

A method of operating a smart satellite antenna apparatus including a satellite tracking antenna according to an embodiment of the present invention includes: receiving, by a controller, a command to select a channel of a satellite broadcast from a user and controlling, by the controller, movement and rotation of the satellite tracking antenna corresponding to the channel of the satellite broadcast; transferring, by the controller, satellite broadcast content, received corresponding to the channel, via a wired link so that the satellite broadcast content is displayed on a display device; setting up, by the controller, a multicasting network based on wireless links so that the satellite broadcast content is displayed on a plurality of wireless devices other than the display device via the wireless links; and managing, by the controller, the multicasting network so that the satellite broadcast content is transferred to each of the plurality of wireless devices via the multicasting network and the satellite broadcast content is shared among the display device and the plurality of wireless devices.

The present invention has been conceived to achieve the above-described object. A smart satellite antenna apparatus according to an embodiment of the present invention includes a satellite tracking antenna and a controller. The controller receives a command to select a channel of a satellite broadcast from a user, and controls the movement and rotation of the satellite tracking antenna corresponding to the channel of the satellite broadcast. The smart satellite antenna apparatus includes an emergency controller that includes a multi-sensor having a nearby voice and sound recognition function, and detects an emergency situation and transmits a rescue signal corresponding to the emergency situation via an external communication network when the emergency situation is detected. The emergency controller detects whether the emergency situation has occurred based on a detection result of the multi-sensor, tracks a current location determined from an operation of the satellite tracking antenna when the emergency situation is detected, and checks a nearby available communication network and then transmits the rescue signal corresponding to the emergency situation using the available communication network when the emergency situation is detected.

The emergency controller may recognize the pattern of nearby voice and sound detected by the multi-sensor and generate context information about a nearby situation, and may cross-check whether detection information detected by another element of the multi-sensor indicates the emergency situation based on the context information.

The emergency controller may be installed in a case separate from hardware of the controller.

The emergency controller may be integrated with hardware of the controller in the same case.

A method of operating a smart satellite antenna apparatus according to an embodiment of the present invention includes: receiving a command to select a channel of a satellite broadcast from a user and controlling the movement and rotation of the satellite tracking antenna corresponding to the channel of the satellite broadcast; detecting whether an emergency situation has occurred based on multi-sensing information detected by a multi-sensor having a nearby voice and sound recognition function; when the emergency situation is detected, tracking a current location determined from an operation of the satellite tracking antenna; and, when the emergency situation is detected, checking a nearby available communication network and transmitting a rescue signal corresponding to the emergency situation using the available communication network.

### Advantageous Effects

According to the present invention, there may be implemented the movable smart satellite antenna apparatus installed on a vehicle such as a camping car or a ship such as a yacht, i.e., the apparatus including the satellite antenna and the controller for controlling the driving of the satellite antenna, unlike in the prior art.

According to the present invention, there may be implemented the movable smart satellite antenna apparatus, i.e., the technology capable of conveniently receiving a satellite broadcast even in an environment where it is difficult to separately install a large and heavy set-top box, such as an outdoor site.

According to the controller of the satellite antenna of the present invention, users may share a satellite broadcast through a plurality of smart terminals as well as a TV by using the limited computing power of a controller in an environment where it is difficult for the users to access other broadcast content, e.g., in an outdoor site or at sea.

According to the controller of the satellite antenna of the present invention, users may share a satellite broadcast through a plurality of smart terminals as well as a TV by controlling wireless networks while using the limited computing power of a controller in an environment where it is difficult for the users to access other wireless networks, e.g., in an outdoor site or at sea.

According to the controller of the satellite antenna of the present invention, an efficient multicasting network may be provided by minimizing a time difference between the broadcast channel content displayed on a TV and a shared screen displayed on a wireless terminal.

According to the present invention, there may be implemented the emergency situation detection technology that applies not only a speech recognition technology but also a technology capable of recognizing a pattern and extracting context information from audio/sound, thereby enhancing the ability to determine an emergency situation by using cross-check between multi-sensing information and voice-sound recognition information and additionally determining the urgency of the emergency situation.

### Description of Drawings

FIG. 1 is a diagram showing an overview of an outdoor smart satellite antenna apparatus in the technical field of the present invention;
FIG. 2 is a diagram showing an outdoor smart satellite broadcast reception system including the outdoor smart satellite antenna apparatus in the technical field of the present invention;
FIG. 3 is a diagram showing an embodiment in which a multicasting streaming service is provided using an outdoor smart satellite antenna apparatus according to an embodiment of the present invention;
FIG. 4 is a diagram showing the outdoor smart satellite antenna apparatus capable of providing a multicasting streaming service and a system including the apparatus according to an embodiment of the present invention;
FIG. 5 is a diagram showing a smart satellite antenna apparatus according to the present invention, which is an embodiment capable of multi-sensing-based emergency situation detection and rescue signal transmission;
FIG. 6 is a diagram showing a smart satellite antenna apparatus according to the present invention, which is an embodiment capable of multi-sensing-based emergency situation detection and rescue signal transmission; and
FIG. 7 is a diagram showing a vehicle or yacht accident detection and emergency rescue request system including a smart satellite antenna apparatus according to an embodiment of the present invention.

### Best Mode

The present invention has been conceived to achieve the above-described object. A smart satellite antenna apparatus according to an embodiment of the present invention includes a satellite tracking antenna and a controller. The controller receives a command to select a channel of a satellite broadcast from a user, and controls the movement and rotation of the satellite tracking antenna corresponding to the channel of the satellite broadcast. The controller transfers satellite broadcast content, received corresponding to the channel, via a wired link so that the satellite broadcast content is displayed on a display device, sets up a multicasting network based on wireless links so that the satellite broadcast content is displayed on a plurality of wireless devices other than the display device via the wireless links, and manages the multicasting network so that the satellite broadcast content is transferred to each of the plurality of wireless devices via the multicasting network and the satellite broadcast content is shared among the display device and the plurality of wireless devices.

The controller may adaptively determine whether to set up the multicasting network and perform the designation of a plurality of wireless devices as multicasting targets based on the interaction with the user.

The controller may recognize a plurality of wireless devices, and set at least some of the plurality of wireless devices as one group. The controller may set up a multicasting network assigning the identical (or common) bandwidth for a plurality of group wireless devices included in the one group. The controller may manage the multicasting network so that the plurality of group wireless devices share the multicasting network and receive the satellite broadcast content.

The controller may adjust the timing condition of a data stream transmitted to at least one of the display device and the plurality of wireless devices so that a difference between the times at which the satellite broadcast content is played on the display device and the plurality of wireless devices falls within a reference value.

The controller may extract a command keyword from a voice command of the user based on an artificial intelligence speech recognition technology. The controller may control an auto-tracking operation of the satellite tracking antenna corresponding to the channel of the satellite broadcast based on the command keyword. The controller may automatically determine whether to set up the multicasting network and perform the designation of a plurality of wireless devices as multicasting targets based on the command keyword.

A method of operating a smart satellite antenna apparatus including a satellite tracking antenna according to an embodiment of the present invention includes: receiving, by a controller, a command to select a channel of a satellite broadcast from a user and controlling, by the controller, movement and rotation of the satellite tracking antenna corresponding to the channel of the satellite broadcast; transferring, by the controller, satellite broadcast content, received corresponding to the channel, via a wired link so that the satellite broadcast content is displayed on a display device; setting up, by the controller, a multicasting network based on wireless links so that the satellite broadcast content is displayed on a plurality of wireless devices other than the display device via the wireless links; and managing, by the controller, the multicasting network so that the satellite broadcast content is transferred to each of the plurality of wireless devices via the multicasting network and the satellite broadcast content is shared among the display device and the plurality of wireless devices.

The present invention has been conceived to achieve the above-described object. A smart satellite antenna apparatus according to an embodiment of the present invention includes a satellite tracking antenna and a controller. The controller receives a command to select a channel of a satellite broadcast from a user, and controls the movement and rotation of the satellite tracking antenna corresponding to the channel of the satellite broadcast. The smart satellite antenna apparatus includes an emergency controller that includes a multi-sensor having a nearby voice and sound recognition function, and detects an emergency situation and transmits a rescue signal corresponding to the emergency situation via an external communication network when the emergency situation is detected. The emergency controller detects whether the emergency situation has occurred based on a detection result of the multi-sensor, tracks a current location determined from an operation of the satellite tracking antenna when the emergency situation is detected, and checks a nearby available communication network and then transmits the rescue signal corresponding to the emergency situation using the available communication network when the emergency situation is detected.

The emergency controller may recognize the pattern of nearby voice and sound detected by the multi-sensor and generate context information about a nearby situation, and may cross-check whether detection information detected by another element of the multi-sensor indicates the emergency situation based on the context information.

The emergency controller may be installed in a case separate from hardware of the controller.

The emergency controller may be integrated with hardware of the controller in the same case.

A method of operating a smart satellite antenna apparatus according to an embodiment of the present invention includes: receiving a command to select a channel of a satellite broadcast from a user and controlling the movement and rotation of the satellite tracking antenna corresponding to the channel of the satellite broadcast; detecting whether an emergency situation has occurred based on multi-sensing information detected by a multi-sensor having a nearby voice and sound recognition function; when the emergency situation is detected, tracking a current location determined from an operation of the satellite tracking antenna; and, when the emergency situation is detected, checking a nearby available communication network and transmitting a rescue signal corresponding to the emergency situation using the available communication network.

### Mode for Invention

Other objects and features of the present invention in addition to the above-described objects will be apparent from the following description of embodiments taken with reference to the accompanying drawings.

Embodiments of the present invention will be described in detail below with reference to the accompanying drawings. In the following description, when it is determined that a detailed description of a related known component or function may unnecessarily make the gist of the present invention obscure, it will be omitted.

Among the components of the present invention, the components known to those skilled in the art prior to the filing of the present application will be described as parts of the configuration of the present invention in this specification as necessary, but the descriptions thereof may be omitted when it is considered that the descriptions of the items obvious to those skilled in the art may make the spirit of the invention obscure. In addition, for the items omitted in the present specification, the descriptions thereof may be replaced by providing the notification that they are known to those skilled in the art through prior art documents, such as Korean Patent Application Publication No. 10-2015-0043876 entitled "Satellite Channel Search Method and Device," Korean Patent No. 10-2031250 entitled "Satellite and Terrestrial Wave Reception Automatic Tracking Antenna having 360-degree Azimuth Rotation Structure," Korean Patent Application Publication No. 10-2017-0087712 entitled "Display Device and Method of Controlling Display Device," U.S. Patent No. 10,779,030 entitled "Display Apparatus and Controlling Method Thereof," Korean Patent Application Publication No. 10-2018-0109340 entitled "Electronic Device and Screen Sharing Method of Electronic Device," U.S. Patent Application Publication No. 2020/0057589 entitled "Electronic Device and Screen Sharing Method of Electronic Device," Korean Patent No. 10-2139107 entitled "Broadcast Data Mirroring Service Provision System and Method for Smart TV and Smartphone for Receiving Multi-Channel Broadcast Signals," and Korean Patent No. 10-1879254 entitled "Satellite Broadcast Reception TV that Detects Accident and Generates Alarm."

Some of the items disclosed by these prior art documents are related to the problem to be solved by the present invention, and some of the solutions adopted by the present invention may also be applied to these prior art documents.

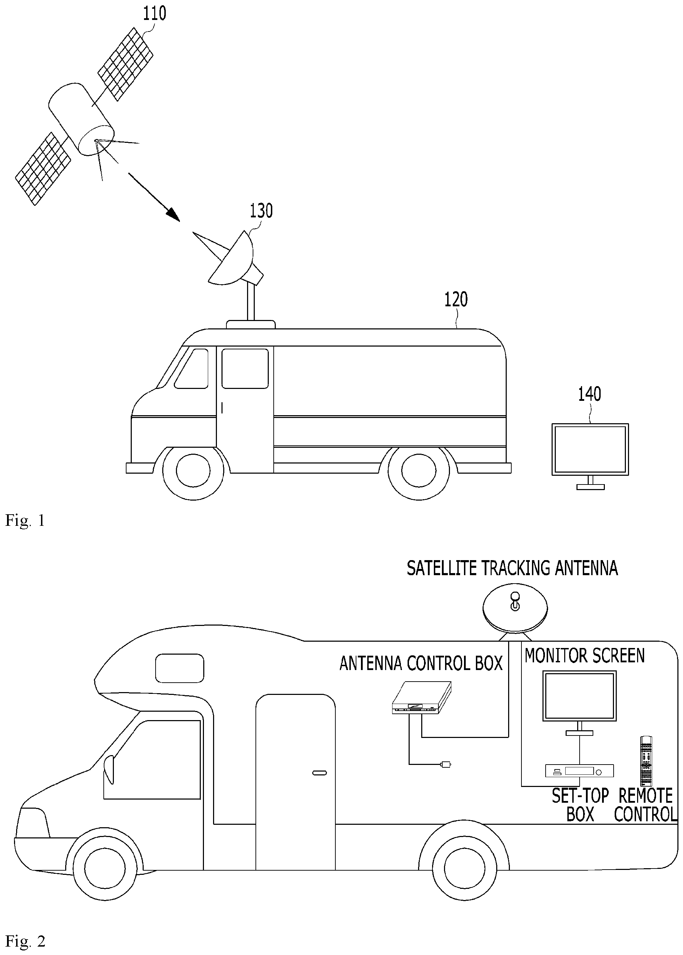

In the following description given in conjunction with FIGS. 1 to 4, descriptions of the items considered to be well-known technologies in the art to which the present invention pertains may be omitted as necessary or may be replaced by citing prior art documents in order to prevent the gist of the present invention from being obscured.

Furthermore, some or all of the components of the prior art documents cited above and the prior art documents to be cited later are related to the problem to be solved by the present invention, and some of the solutions adopted by the present invention may be borrowed from the prior art documents.

Among the components disclosed in the prior art documents, only the items also included in order to specify the present invention will be considered to be parts of the configuration of the present invention. In this case, among the components disclosed in the prior art documents, only the components not contrary to the object of the present invention may be considered to be parts of the configuration of the present invention.

For example, it will be apparent to those skilled in the art that a configuration in which connection settings between a smartphone and a smart TV are made via a wireless LAN technology such as Wi-Fi, Bluetooth, or Wi-MAX, a configuration which transmits a channel list from a set-top box to a smartphone, displays the channel list information of the smart TV on the smartphone, and receives a user selection, a configuration which transmits satellite broadcast signals A2 from a smart TV to a smartphone, reduces the size of images to the size of the DMB screen of the smartphone, synchronizes reduced video data and reduced audio data, and transmits the synchronized data to the smartphone, and a configuration that adjusts the horizontal-to-vertical ratio to match the size of UHD or HD video to the screen size of a smartphone in connection with video scaling may be implemented by appropriately selecting the items disclosed in Korean Patent Application Publication No. 10-2018-0109340 entitled "Electronic Device and Screen Sharing Method of Electronic Device," U.S. Patent Application Publication No. 2020/0057589 entitled "Electronic Device and Screen Sharing Method of Electronic Device," and/or Korean Patent No. 10-2139107 entitled "Broadcast Data Mirroring Service Provision System and Method for Smart TV and Smartphone for Receiving Multi-Channel Broadcast Signals" within the range not contrary to the purpose of the present invention. Accordingly, descriptions thereof are omitted.

Details of the present invention will be described below through the embodiments of FIGS. 1 to 4.

FIG. 1 is a diagram showing an overview of an outdoor smart satellite antenna apparatus in the technical field of the present invention.

Referring to FIG. 1, an artificial satellite 110 may be used to transmit a broadcast. In this case, the satellite 110 may receive satellite broadcast signals from a terrestrial broadcasting station, and may retransmit the satellite broadcast signals to terrestrial reception devices.

A satellite broadcast reception system includes a satellite broadcast reception antenna 130, a satellite broadcast reception device (not shown), and a display device 140. The satellite broadcast reception antenna 130 is generally a directional antenna. Accordingly, before a satellite broadcast is received, the satellite broadcast reception antenna 130 needs to be adjusted to face the satellite.

The satellite broadcast reception system may be mounted on a vehicle 120, as shown in FIG. 1. In this case, the direction of the satellite broadcast reception antenna 130 may be changed as the direction of the vehicle 120 is changed. Even in the case where a satellite broadcast is received after the vehicle 120 has been parked, if the parking direction of the vehicle 120 is changed, the direction of the satellite broadcast reception antenna 130 needs to be readjusted to receive the satellite broadcast.

However, it is cumbersome to adjust the direction of the satellite broadcast reception antenna 130 each time, and it is not easy for a general user to precisely adjust the direction of the satellite broadcast reception antenna 130 to the direction of a satellite that transmits a channel to be received by him or her.

Although the direction of the satellite broadcast reception antenna 130 may be automatically controlled in the direction of a satellite, a user interface for this is complicated, and thus a general user still has a problem in receiving a satellite broadcast using the satellite broadcast reception antenna 130.

As examples of efforts to improve the process of receiving a satellite broadcast using the satellite broadcast reception antenna 130, the above-described Korean Patent Application Publication No. 10-2015-0043876 entitled "Satellite Channel Search Method and Device" and Korean Patent No. 10-2031250 entitled "Satellite and Terrestrial Wave Reception Automatic Tracking Antenna having 360-degree Azimuth Rotation Structure" have been disclosed, and some of the configurations of the prior art documents may be applied to the present invention within the scope that meets the object of the present invention.

FIG. 2 is a diagram showing an outdoor smart satellite broadcast reception system including an outdoor smart satellite antenna apparatus in the technical field of the present invention.

FIG. 2 is a comparative example of the present invention, and discloses a configuration requiring a separate set-top box in addition to an antenna controller (box). It will be apparent to those skilled in the art that that the example of FIG. 2 does not correspond to the prior art for the present invention recognized by the patent laws and is a comparative example configured to help to understand the present invention.

In the comparative example of FIG. 2, the satellite broadcast reception system requires a separate set-top box in addition to the controller (an antenna control box) that controls a satellite tracking antenna. The satellite tracking antenna and the controller are connected via a wired connection. The set-top box is also connected to the satellite tracking antenna via a wired connection, and a TV monitor and the set-top box are also connected via a wired connection. A remote control affects the content displayed on the TV monitor while operating in conjunction with the set-top box. This method is a comparative example in which a broadcast can be viewed only inside a vehicle using the TV monitor connected via a wired connection.

Meanwhile, when the comparative example of FIG. 2 is combined with the technology disclosed in Korean Patent Application Publication No. 10-2018-0109340 entitled "Electronic Device and Screen Sharing Method of Electronic Device," U.S. Patent Application Publication No. 2020/0057589 entitled "Electronic Device and Screen Sharing Method of Electronic Device," and/or Korean Patent No. 10-2139107 entitled "Broadcast Data Mirroring Service Provision System and Method for Smart TV and Smartphone for Receiving Multi-Channel Broadcast Signals," the configurations disclosed in these prior art documents can be implemented only on the assumption that all of them are performed in a set-top box. It will be apparently appreciated by those skilled in the art that those skilled in the art cannot implement the configurations disclosed in these prior art documents without a separate set-top box because the items disclosed in these prior art documents require a considerable level of computing power and essentially include storage having a large storage space.

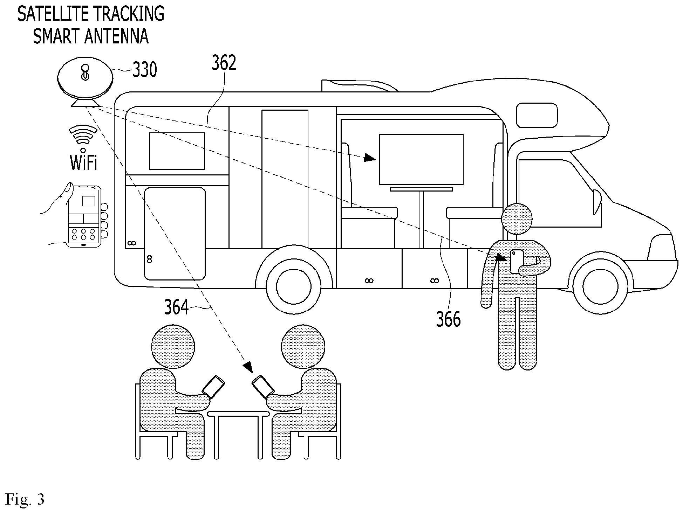

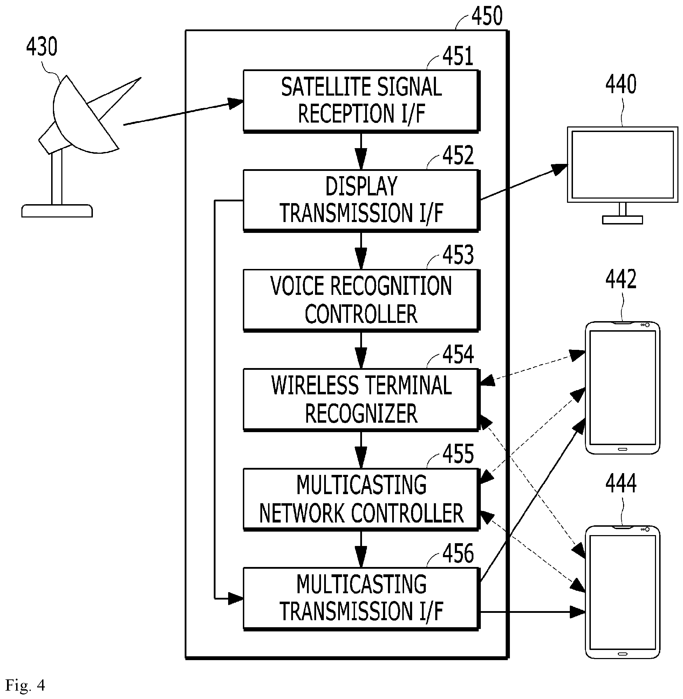

The present invention does not necessarily require a separate set-top box, and provides the function of forming a multicasting network in the controller of a satellite tracking antenna without a separate set-top box. The controller and multicasting network streaming service of the smart satellite antenna apparatus of the present invention will be described in detail below with reference to FIGS. 3 and 4.

FIG. 3 is a diagram showing an embodiment in which a multicasting streaming service is provided using an outdoor smart satellite antenna apparatus according to an embodiment of the present invention.

FIG. 4 is a diagram showing the outdoor smart satellite antenna apparatus capable of providing a multicasting streaming service and a system including the apparatus according to an embodiment of the present invention.

Referring to FIGS. 3 and 4, a satellite tracking smart antenna 330 or 430 may be connected to a controller 450, and the controller 450 may include at least one processor, memory, and/or storage therein. In addition, the multicasting streaming service using the smart satellite antenna of the present invention may be provided to an outdoor site in the form of program instructions readable by a computer, and the multicasting streaming service may be provided to a user in such a manner that the program instructions are stored or loaded and executed by the at least one processor and/or in the memory.

The controller 450 corresponds to, e.g., a computing system (not shown), and the computing system may include a processor, memory, storage, a database, and/or a communication interface module. The following operations and functions are performed by the processor in the computing system, and the processor may perform the following operations and functions in cooperation with at least one of the memory, the storage, the database, and/or the communication interface module.

The smart satellite antenna apparatus of the present invention may include the satellite tracking antenna 330 or 430 and the controller 450.

By the controller 450, the satellite broadcast content received via the satellite tracking smart antenna 330 may be provided to a display device inside a vehicle via a wired link 362, or may be provided to a wireless or smart device carried by a user via a wireless link 364 or 366.

In this case, it will be apparent to those skilled in the art that the provision of satellite broadcast content via the wired link 362 is the same as the broadcast service shown in the comparative example of FIG. 2 and the multicasting disclosed in the present invention is based on a concept excluding broadcast streaming via the wired link 362.

The multicasting service may be provided to a wireless device or smart device carried by the user via the wireless link 364 or 366, and may be executed and optimized by the controller 450 of the present invention. Accordingly, the user may view a satellite broadcast wirelessly using the smart device even outside the vehicle. In this case, in order to synchronize or minimize the time difference between the satellite broadcast content provided through the TV display connected to the inside of the vehicle via the wired link 362 and the object of the multicasting network provided via the wireless link 364, the multicasting network may be optimized or a timing condition may be adjusted by the controller 450.

By the smart satellite antenna apparatus of the present invention, the controller 450 receives satellite broadcast signals via the satellite antenna 330 or 430, and directly shares a satellite broadcast stream with nearby wireless devices/smart devices 442 and 444 without a separate set-top box. In this case, the wired link 362 is not included in the multicasting network, but the satellite broadcast stream may be shared between the multicasting network based on the wireless links 364 and 366 and the wired link 362.

The present invention is also differentiated from the technologies of the prior art documents and the comparative example of FIG. 2 in that the controller 450 of the present invention forms the wireless multicast networks 364 and 366 with the nearby wireless and smart devices 442 and 444.

A satellite signal reception interface 451 in the controller 450 receives satellite broadcast signals through the satellite tracking smart antenna 430.

A display transmission interface 452 in the controller 450 may convert the received satellite broadcast signals into content data and transmit it to a TV 440 via the wired link 362.

Among the technologies for the specific operations of the satellite signal reception interface 451 and the display transmission interface 452 and/or the technology by which the smart satellite antennas 330 and 430 are moved and rotated to receive desired satellite signals or a desired satellite broadcast channel through the controller 450, the descriptions of the configurations known to those skilled in the art through the above-described Korean Patent Application Publication No. 10-2015-0043876 entitled "Satellite Channel Search Method and Device," Korean Patent No. 10-2031250 entitled "Satellite and Terrestrial Wave Reception Automatic Tracking Antenna having 360-degree Azimuth Rotation Structure," Korean Patent Application Publication No. 10-2017-0087712 entitled "Display Device and Method of Controlling Display Device," U.S. Patent No. 10,779,030 entitled "Display Apparatus and Controlling Method Thereof," Korean Patent Application Publication No. 10-2018-0109340 entitled "Electronic Device and Screen Sharing Method of Electronic Device," U.S. Patent Application Publication No. 2020/0057589 entitled "Electronic Device and Screen Sharing Method of Electronic Device," Korean Patent No. 10-2139107 entitled "Broadcast Data Mirroring Service Provision System and Method for Smart TV and Smartphone for Receiving Multi-Channel Broadcast Signals," and Korean Patent No. 10-1879254 entitled "Satellite Broadcast Reception TV that Detects Accident and Generates Alarm" are substituted for the corresponding descriptions of the present invention.

Furthermore, the display transmission interface 452 may convert the received satellite broadcast signals into content data and transmit it to a multicasting transmission interface 456.

The wireless terminal recognizer 454 may recognize the wireless device/smart device 442/444 of at least one user who wants to view a satellite broadcast, and may transmit the identification information of the wireless device/smart device 442/444 of the user who wants to view a satellite broadcast to a multicasting network controller 455.

In this case, the multicasting network service may be provided by designating any one of the wireless and smart devices 442 and 444 of users as a master in addition to the remote controller, inputting a multicasting-related command to the master terminal, and transmitting the multicasting-related command to the controller 450 by means of an application program installed in the master terminal. The commands regarding not only the driving and auto-tracking of the satellite antenna but also whether to provide multicasting to the wireless device/smart device 442/444 of the user and the designation of a multicasting target may be transmitted to the controller 450 by inputting commands regarding whether to execute multicasting on the master smart terminal and the designation of a multicasting target terminal.

The multicasting network controller 455 may manage/control the formation of multicasting networks with the wireless device/smart device 442/444 of the corresponding user based on the identification information of the wireless device/smart device 442/444 of the user who wants to view a satellite broadcast. In other words, the multicasting network controller 455 may distribute or allocate bandwidths for multicasting streaming with the wireless and smart devices 442 and 444 of the users who want to view a satellite broadcast.

Furthermore, the multicasting network controller 455 may determine the bandwidth of stream sharing target data within the frequency band defined by the Wi-Fi standard based on the screen size of each smart device and the number of smart devices.

The multicasting network controller 455 may set the target bandwidth of a digital data stream, into which the satellite broadcast signals are converted, by taking into consideration the frequency band defined by the Wi-Fi standard and usable based on the situation of a site, the number of nearby wireless and smart terminals, and the sizes of the screens of the nearby wireless and smart terminals.

In at least one embodiment of the present invention, the multicasting network controller 455 sets the wireless multicasting link/network 364 and 366 toward the plurality of smart terminals 442 and 444 by mirroring a broadcast signal M1 displayed through the TV, and the broadcast signal M1 may be multicast toward the plurality of smart terminals 442 and 444 through the wireless links 364 and 366.

The multicasting network controller 455 may form a multicasting network between the controller 450 of the satellite antenna and a plurality of terminals in one group by grouping terminals having the same specifications required for multicasting, such as a screen specification, among nearby wireless and smart terminals. In this case, the plurality of terminals within one group may share the same (identical or common) Wi-Fi frequency band. The required Wi-Fi frequency bandwidth may be reduced by this scheme.

For example, when among smart terminals A, B, and C, smart terminals A and B use a single frequency channel and smart terminal C uses a different frequency channel, a multicast may be provided to three devices using only two Wi-Fi frequency channels. In this case, in the case where smart terminals A and B receive a satellite broadcast stream via one Wi-Fi channel, a setting may be made such that a separate channel other than the satellite broadcast streaming channel is used when terminal A or B sends a message to the controller of the satellite antenna, so that the multicasting network can be managed to prevent privacy of users between terminals A and B from being infringed. More specifically, when two or more terminals share one broadcast streaming channel, this channel is a one-way channel, and data is transmitted only from the controller to the terminal. When a signal is transmitted from a terminal to the controller through the broadcast streaming channel, only a minimum message for system management, e.g., an ACK message, may be transmitted in the reverse direction.

In this case, the satellite broadcast stream occupies a fixed bandwidth such as, e.g., a 100 MHz bandwidth. When such a satellite broadcast stream is transmitted via the wireless links 364 and 366 without compression, it occupies a considerably large wireless bandwidth. Even when compression including MPEG encoding is performed, a common case is that a wireless bandwidth for satellite broadcast streaming is larger than a wireless communication channel for transmitting and receiving messages. Accordingly, in the present invention, a group in which appropriate sharing can be performed may be formed by taking into consideration the characteristics of wireless terminals, the same (or common) frequency band may be set for terminals in the group, and then the multicasting of a satellite broadcast stream may be performed. In this case, for the stable and synchronized (or minimized time difference) sharing of a satellite broadcast stream, it is advantageous that unilateral streaming from the controller 450 to the terminals in the group is performed in connection with the bandwidth over which multicasting is performed. Accordingly, when at least one of the terminals in the group needs to transmit a message to the controller 450 for network configuration, control, and management, a message may be sent using a separate wireless communication channel (which may be implemented using a much smaller bandwidth than a multicasting network for streaming).

Meanwhile, in another embodiment of the present invention, the satellite signal reception interface 451 may receive two satellite broadcast channels via vertical/horizontal components even through a single reception setting when receiving a satellite broadcast via a single tuner. Within this range, a channel may be selected via the application menu of each of the nearby wireless and smart devices 442 and 444. A multicast object may be a digital data stream obtained by converting the signals of the channel selected by each of the wireless and smart devices 442 and 444.

Due to the characteristics of satellite broadcasting, when the channel M1 is selected for TV and a satellite is auto-tracked to receive the channel M1, a channel M2 may also be provided to a user based on the vertical/horizontal components of M1 in the present invention. In other words, the TV may display the channel M1, and the plurality of smart terminals may display the channel M1 or M2. In this case, a group sharing the same channel of a multicasting network may be determined by taking into consideration the characteristics of the terminals, the channel selected by each of the terminals (whether the selected channel is M1 or M2), and the positional relationships with the controller.

In this case, in at least one embodiment of the present invention, whether multicasting will be performed by the controller of the present invention and/or the result of designating a plurality of terminals as the targets of multicasting determined by the controller of the present invention does not have to be fed back to the satellite. Whether multicasting will be performed by the controller of the present invention and/or the designation of a plurality of terminals as the targets of multicasting determined by the controller of the present invention may be dynamically determined at an actual site. In other words, the controller may determine whether to multicast at an actual site based on the interaction with the user terminals, and the controller may freely add or remove a terminal as the target of multicasting based on the interaction with the user terminals. In this case, whether multicasting will be performed and the result of the designation of the terminals as the targets of multicasting may not affect the content of a satellite broadcast stream received from the satellite. In other words, whether multicasting will be performed and the result of the designation of the terminals as the targets of multicasting target may be dynamically determined at an actual site regardless of satellite and satellite broadcast providers.

When the targets of multicasting are dynamically changed at a site, the controller 450 may adjust a timing condition for synchronization with an added terminal, a terminal already included in the multicasting targets, and a TV display. In this case, when it is difficult to perform complete synchronization, the controller of the present invention may adjust the timing condition of at least one of a first broadcast stream transmitted to the display and a second broadcast stream transmitted to the wireless terminal so that the difference in playing time between the terminal and the display can fall within a reference value.

Furthermore, the controller 450 may adjust the timing condition of at least one of the broadcast streams to be transmitted to the plurality of terminals so that the difference in playing time between the broadcast streams transmitted to the plurality of terminals can fall within the reference value.

Meanwhile, the multicasting network controller 455 may determine the bandwidth of data to be streamed and shared within the frequency band stipulated in the Wi-Fi standard as well as the frequency band used by other wireless LAN technologies, i.e., Bluetooth and the like, based on the screen size of each smart device and the number of smart devices.

The multicasting transmission interface 456 may receive satellite broadcast stream data as content data from the display transmission interface 452, and may directly share the satellite broadcast stream with nearby smart devices via the wireless link channels according to the Wi-Fi bandwidth information transmitted by the multicasting network controller 455 and allocated to each of the wireless and smart devices 442 and 444 of the users.

In at least one embodiment of the present invention, the multicasting transmission interface 456 may not necessarily perform MPEG encoding on the satellite broadcast stream data. Accordingly, it may possible to maintain the real-time property of image sharing without consuming time and/or computing power for image scaling and/or MPEG encoding, unlike in the prior art.

In another embodiment of the present invention, when the number of reception target smart devices increases, MPEG encoding may be partially performed. In this case, unless compression such as MPEG encoding is performed, a large part of the Wi-Fi bandwidth is occupied, and thus the number of smart devices that will share screens may be limited. Since the Wi-Fi bandwidth is not an unlimited resource, whether to perform MPEG encoding may be selected according to the situation in some embodiments of the present invention.

In this case, the multicasting transmission interface 456 may perform image scaling or MPEG encoding on the satellite broadcast stream data by taking into consideration the screen standard of the satellite broadcast, such as SD, HD and UHD, and the screen standard of each smart device.

Meanwhile, the satellite signal reception interface 451 or the display transmission interface 452 may transmit the control signals of satellite reception signals to the voice recognition controller 453.

The voice recognition controller 453 may control the driving of the satellite antenna so that a user's voice corresponding to a channel to be viewed by the user can be recognized and satellite broadcast signals can be received from a satellite corresponding to the channel.

The voice recognition controller 453 is combined with a satellite antenna auto-tracking technology based on voice recognition and recognizes voice through the microphone of a remote control that is basically provided together with the satellite antenna, thereby allowing the driving and auto-tracking the satellite antenna to be implemented.

The implementation of a satellite antenna auto-tracking technology based on artificial intelligence voice recognition may be implemented by borrowing some of the technologies disclosed in the prior art documents such as Korean Patent Application Publication No. 10-2015-0043876 entitled "Satellite Channel Search Method and Device," Korean Patent No. 10-2031250 entitled "Satellite and Terrestrial Wave Reception Automatic Tracking Antenna having 360-degree Azimuth Rotation Structure," Korean Patent Application Publication No. 10-2017-0087712 entitled "Display Device and Method of Controlling Display Device," and U.S. Patent No. 10,779,030 entitled "Display Apparatus and Controlling Method Thereof," and then modifying the borrowed configurations in accordance with the purpose of the present invention. The descriptions of the corresponding configurations of the present is replaced by listing the prior art documents.

Furthermore, the voice recognition controller 453 may provide a voice recognition interface so that the wireless terminal recognizer 454 can recognize the nearby wireless and smart devices 442 and 444 of the users by recognizing the voices of the users using an artificial intelligence-based voice recognition technique. In this case, the voice recognition controller 453 may provide a voice recognition-based user interface that combines with the satellite antenna auto-tracking technology based on a voice recognition technology and recognizes the voices of users, thereby enabling commands regarding not only the driving and auto-tracking of the satellite antenna but also whether to perform multicasting for the nearby wireless and smart devices 442 and 444 of the users and the designation of multicasting targets to be input to the controller 450 based on voice recognition.

In this case, any one of the wireless and smart devices 442 and 444 of the user may be designated as a master in addition to the remote controller, a voice command may be input to the master terminal, and voice recognition may be performed by an application program installed on the master terminal. Accordingly, commands regarding not only the driving and auto-tracking the satellite antenna but also whether to provide multicasting to the wireless and smart devices 442 and 444 of the user and the designation of multicasting targets may be transferred to the controller by inputting voice commands to the master smart terminal.

It is assumed that at least one embodiment of the present invention does not include a separate set-top box (STB) and a satellite antenna controller performs some functions of the set-top box. It is assumed that another embodiment of the present invention may include a separate set-top box but the separate set-top box mainly performs additional functions such as user authentication for the viewing of paid content and/or restriction on content for the protection of children.

The present invention assumes a situation in which the computing power of the controller is limited for these reasons, and is a screen sharing technology optimized for insufficient computing power and Wi-Fi bandwidth.

Furthermore, since the present invention is a multicasting technology for a real-time satellite broadcast that shares a real-time satellite broadcast with other smart devices, it is differentiated from the prior art and the comparative example of FIG. 2 in that elements that are not suitable for real-time sharing are drastically excluded and only essential configurations are adopted.

Although multicasting is often mentioned in prior art documents in the field of IPTV or satellite broadcasting, the multicasting of the prior art introduces the concept in which a wired multicast network is constructed from a broadcasting server to a subscriber set-top box, e.g., in an IPTV service, and it is merely a backward compatible concept of broadcast.

In contrast, the present invention is differentiated from the prior art and the comparative example of FIG. 2 in that the controller 450 of the satellite antenna 330 or 430 recognizes the nearby wireless and smart devices 442 and 444 and sets up the wireless multicast networks 364 and 366 with the nearby wireless and smart devices 442 and 444.

Furthermore, the present invention is different from the concept of providing a multicasting service to a subscriber who has previously subscribed to a wired or wireless service. In at least one embodiment of the present invention, whether the multicasting of the present invention will be provided and the designation of a plurality of terminals as the targets of multicasting do not need to be fed back to the satellite. In an embodiment of the present invention, whether to perform multicasting and the selection and designation of a plurality of terminals that are the targets of multicasting may be dynamically determined at an actual site. In other words, a user may select whether to perform multicasting at an actual site, and may freely add or remove a terminal as a multicasting target. Whether to perform multicasting and the designation of terminals may not affect the content of a satellite broadcast stream that is received from the satellite. Whether to perform multicasting and the designation of terminals may be determined freely and dynamically based on the interaction between the controller 450 and a user in an outdoor site independently of satellite and broadcast content providers.

Although the smart antenna apparatus installed in a vehicle is illustrated in FIGS. 3 and 4, it will be apparent to those skilled in the art that the spirit of the present invention is directed to a technology that may be installed on a ship such as a yacht or on a movable transportation means and provide a multicasting network service so that a user can share a satellite broadcast stream with nearby wireless terminals.

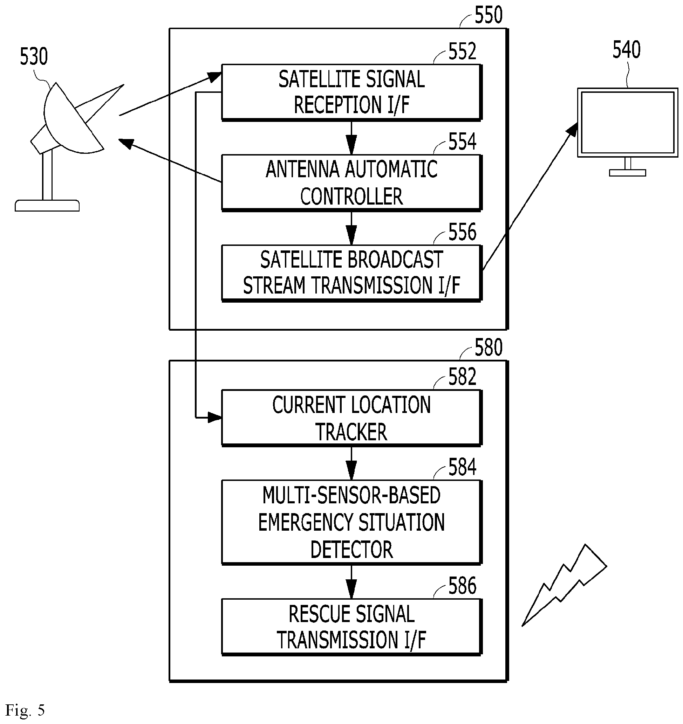

FIG. 5 is a diagram showing an apparatus including a smart satellite antenna capable of multi-sensing-based emergency situation detection and rescue signal transmission according to an embodiment of the present invention.

Referring to FIG. 5, there are shown a controller 550 connected to a satellite tracking antenna 530 and configured to control the satellite tracking antenna 530 and receive satellite broadcast signals from the satellite tracking antenna 530, and an emergency control box 580 configured to provide a multi-sensing-based emergency situation detection function.

The controller 550 may include at least one processor, memory, storage, and/or a communication interface module therein. The emergency control box 580 may include a multi-sensor capable of detecting a plurality of different situations therein, and may include at least one processor, memory, storage, and/or a communication interface module therein, like the controller 550.

Furthermore, a multi-sensing-based emergency situation detection and rescue signal request function using the smart satellite antenna of the present invention may be provided to an outdoor site in the form of program instructions readable by a computer. An emergency situation detection and rescue signal request operation may be provided to a user in such a manner that the program instructions are stored or loaded and then executed by the at least one processor and/or in the memory.

The controller 550 corresponds to, e.g., a computing system (not shown), and the computing system may include a processor, memory, storage, a database, and/or a communication interface module. The following operations and functions are performed by the processor in the computing system, and the processor may perform the following operations and functions in cooperation with at least one of the memory, the storage, the database, and/or the communication interface modules.

The emergency control box 580 includes a processor, a memory, storage, a database, and/or a communication interface module, and may further include a multi-sensor capable of detecting a plurality of different situations therein. The following operations and functions are performed by the processor in the computing system, and the processor may perform the following operations and functions in cooperation with at least one of the multi-sensor, the memory, the storage, the database, and/or the communication interface module.

The smart satellite antenna apparatus of the present invention may include the satellite tracking antenna 530, the controller 550, and the emergency control box 580.

The satellite signal receiver 552 in the controller 550 receives satellite broadcast signals through the satellite tracking smart antenna 530.

In this case, based on a channel selection input of the user, the antenna automatic controller 554 in the controller 550 automatically controls the satellite tracking antenna 530 so that the satellite tracking antenna 530 tracks a satellite corresponding to a channel desired by the user. Based on the satellite signal received from the satellite tracking antenna 530 via the satellite signal reception interface 552, the automatic antenna controller 554 allows the satellite tracking antenna 530 to face a satellite corresponding to a channel desired by the user, and may adjust the satellite tracking antenna 530 and the broadcast reception tuner so that the satellite corresponding to the channel desired by the user can be selected.

The satellite broadcast stream transmission interface 556 in the controller 550 may convert received satellite broadcast signals into content data and transmit it to a TV 540 via a wired link.

The corresponding descriptions of the present invention for the more detailed content of the specific operations of the satellite signal reception interface 552, the automatic antenna controller 554, and the satellite broadcast stream transmission interface 556 are replaced by the items known to those skilled in the art through the above-described Korean Patent Application Publication No. 10-2015-0043876 entitled "Satellite Channel Search Method and Device," Korean Patent No. 10-2031250 entitled "Satellite and Terrestrial Wave Reception Automatic Tracking Antenna having 360-degree Azimuth Rotation Structure," Korean Patent Application Publication No. 10-2017-0087712 entitled "Display Device and Method of Controlling Display Device," U.S. Patent No. 10,779,030 entitled "Display Apparatus and Controlling Method Thereof," Korean Patent Application Publication No. 10-2018-0109340 entitled "Electronic Device and Screen Sharing Method of Electronic Device," U.S. Patent Application Publication No. 2020/0057589 entitled "Electronic Device and Screen Sharing Method of Electronic Device," Korean Patent No. 10-2139107 entitled "Broadcast Data Mirroring Service Provision System and Method for Smart TV and Smartphone for Receiving Multi-Channel Broadcast Signals," and Korean Patent No. 10-1879254 entitled "Satellite Broadcast Reception TV that Detects Accident and Generates Alarm."

Outdoor sites such as camping sites used by users for camping may be vulnerable to natural disasters such as a fire, a flood, and an earthquake. Since it takes a lot of time for a rescue team to reach a camping site, it is important to notify users around the camping site of the occurrence of an accident as quickly as possible when the accident occurs at the camping site where a tent or camping car 120 is located. It is also important to report the occurrence of an accident at the camping site to a relief control system (for example, the 119 report center operated by the Korean Ministry of Public Safety and Security) .

In this case, as a prior art configured to detect an accident or calamity/disaster occurring in an outdoor site, control the satellite tracking antenna 530 and receive an appropriate disaster alert broadcast, there has been disclosed Korean Patent No. 10-1879254 entitled "Satellite Broadcast Reception TV that Detects Accident and Generates Alarm" issued to the present applicant.

In the KR 10-1879254, there is disclosed a configuration for controlling the auto tracking of the satellite tracking antenna 530 by adjusting the satellite tracking antenna 530 facing a fixed direction and angle to receive a satellite channel preselected by a user so that the satellite tracking antenna 530 can automatically search for a satellite channel providing a disaster alert broadcast and receive the satellite channel providing a disaster alert broadcast. The disaster alert broadcast received in this way may be shared for other nearby users, or may notify a user of danger through a warning signal.

An accident or emergency situation that may be assumed in an outdoor site may be a flood or a fire such as a forest fire, and an emergency signal capable of detecting this may be an ambient temperature, a photographed image, or whether or not smoke is generated.

When such an emergency situation is detected, an emergency signal indicating a danger may be transmitted and then shared. Short-range communication methods such as NFC, Wi-Fi, Bluetooth, and ZigBee may be used to share such an emergency signal.

In addition, as a condition for generating each emergency signal, a criterion for determining whether there is an emergency situation has also been disclosed through the prior art document Korean Patent No. 10-1879254. For example, when a detected signal is the temperature of a camping site, a multi-sensor-based emergency situation detector 584 may compare the temperature of the camping site with a predetermined threshold value, and may determine that a fire has occurred in the camping site when the temperature of the camping site is higher than the predetermined threshold value.

Furthermore, the ability to determine whether an accident or danger has occurred in a camping site or vehicle may be enhanced using not only a single detection signal but also a plurality of detection signals. The detection signals of the multi-sensor may be the concentration of carbon dioxide inside a camping site or camping car, the temperature inside the camping site or camping car 120, whether or not smoke is generated from the camping site or camping car 120, and an image generated by photographing the camping site or camping car 120. In this case, the multi-sensor-based emergency situation detector 584 may determine that a danger has occurred by combining the result of the comparison of the concentration of carbon dioxide or temperature with a predetermined threshold value and whether or not smoke is generated.

According to another embodiment, the emergency control box 580 may determine that a mobile communication network or wired/wireless IP network is available. In this case, the rescue signal transmission interface 586 may transmit a received emergency signal for each danger factor to an external rescue control system over the mobile communication network or wired/wireless IP network.

In this case, the rescue control system may be the 119 report center or the like operated by the Korean Ministry of Public Safety and Security or the like. The rescue control system may determine whether an accident or danger has occurred in the camping site or camping car 120 based on the emergency signal.

Meanwhile, in Korean Patent No. 10-1879254, there is disclosed a configuration in which a smart satellite antenna apparatus tracks the location of the current satellite broadcast reception TV 540 using a satellite broadcast reception signal.

In addition, Korean Patent No. 10-1879254 discloses a technology in which a smart satellite antenna device detects the angle and direction of the satellite tracking antenna 530. A method of detecting the angle and direction of the satellite tracking antenna 530 may use a geomagnetic sensor. An attitude and heading reference system (AHRS) that measures attitude and orientation using the geomagnetic sensor is an example.

Meanwhile, a technology using voice recognition to control a smart satellite antenna is implemented by borrowing some of the configurations disclosed in the prior art documents, i.e., Korean Patent Application Publication No. 10-2015-0043876 entitled "Satellite Channel Search Method and Device," Korean Patent No. 10-2031250 entitled "Satellite and Terrestrial Wave Reception Automatic Tracking Antenna having 360-degree Azimuth Rotation Structure," Korean Patent Application Publication No. 10-2017-0087712 entitled "Display Device and Method of Controlling Display Device," and U.S. Patent No. 10,779,030 entitled "Display Apparatus and Controlling Method Thereof" and then modifying the borrowed configurations in accordance with the purpose of the present invention. The descriptions of the corresponding configurations of the present is replaced by listing the prior art documents.

The above-described AHRS system is a technique for estimating the angle and altitude of the satellite tracking antenna 530. In general, the elevation angle of the satellite tracking antenna 530 works within the range of 15 degrees to 90 degrees. If the elevation angle exceeds 90 degrees, it is considered that an accident/calamity/disaster in which a vehicle or ship is overturned has occurred, and the smart satellite antenna apparatus may be turned off (to reduce the likelihood of the occurrence of a fire, etc. by taking into consideration safety).

In this case, not all components of the smart satellite antenna apparatus are turned off, and the rescue signal transmission interface 586 may transmit a rescue signal to an external network while being turned on. Meanwhile, the current location tracker 582 may track a current location immediately before the turning off of the satellite tracking antenna 530 through AHRS and GPS technology. The rescue signal transmission interface 586 also transmits information about a current location at the time of the accident when transmitting the rescue signal, thereby providing the advantage of enabling rescue personnel to determine the location of the antenna (the user) at the time of the occurrence of the accident.

The multi-sensor may include a temperature sensor, a carbon dioxide sensor, a gas sensor, and the like. Since carbon dioxide is a gas the concentration of which rapidly increases first when a fire occurs, it may be a basis for determining whether a fire has been detected. In addition, it is also a means to prevent a suffocation accident in a closed space such as the inside space of a camping site, the inside of the camping car 120, or the inside of a yacht.

An additional sensor for toxic gas other than carbon dioxide may be added and provide a more precise basis for determining whether a fire has occurred. In addition, in combination with temperature information detected by the temperature sensor, when the temperature exceeds a threshold value set by taking into consideration seasonal and geographic factors and the concentration of carbon dioxide or toxic gas increases, it may be determined that a fire has occurred and a situation in question may be determined to an emergency situation.

The multi-sensor (not shown) inside the emergency control box 580 according to an embodiment of the present invention detects different types of situation information by means of a plurality of sensors, and provides various grounds so that the multi-sensor-based emergency situation detector 584 can make an advanced decision on whether an emergency situation has occurred or on the urgency of a situation by synthesizing the above types of situation information.

For example, through a microphone or the like may be collected acoustic information - an explosion sound, an impact sound at the time an object is turned over (overturned) or collapses, a scream of a person, a groan of a person, and an environmental sound that allows the occurrence of an earthquake, a landslide, a tsunami, a flooding, or the like to be estimated.

In this case, although the conventional speech recognition technology detects a keyword pronounced by a user using correct pronunciation and extracts the keyword, the artificial intelligence speech recognition technology of the present invention may be implemented based on a learning model that performs pattern learning to identify acoustic information by taking into consideration various situations and, as a result, acquires the inference ability to receive environmental acoustic information and estimate a current situation.

When the AHRS system and the detection information of the multi-sensor are associated with each other, the antenna 530 may recognize a case where the angle of the satellite antenna 530 exceeds 90 degrees and be automatically turned off in an embodiment of the present invention. In another embodiment of the present invention, it is proposed that in a situation in which the angle of the satellite antenna 530 detected by the AHRS system does not exceed 90 degrees and is close to 90 degrees, the sensor-based emergency situation detector 584 may determine whether there is an emergency situation such as an accident/calamity/disaster by synthesizing the surrounding environment information collected by the multi-sensors.

Although the angle detected by the AHRS system has exceeded 90 degrees, the antenna may have collapsed due to a user's operational error, not an accident. The prior art cannot detect such a situation. In contrast, in another embodiment of the present invention, the multi-sensor-based emergency situation detector 584 may determine whether it has been caused by an accident or a user's operational error through the multi-sensing of a surrounding situation. For example, when the sound collected through the microphone is not a screaming or shock sound but a laughter sound, and indicates not an emergency situation but a safe situation, the multi-sensor-based emergency situation detector 584 may recognize that a situation in question is not an emergency situation even when the angle measured by the AHRS system exceeds 90 degrees. As described above, it may be possible to cross-check whether there is an emergency situation based on the information detected by a different sensor through multi-sensing.

Furthermore, it may be also possible to determine the range of the targets to which a rescue signal is automatically transmitted by synthesizing the information collected by the multi-sensor and then determining how urgent a situation in question is.

For example, in the case of a simple accident, a general rescue signal may be transmitted. Alternatively, when a situation in question is judged by a moaning or screaming sound, an urgent rescue signal may be generated when life is in danger.

Alternatively, when the information collected by the multi-sensor indicates the occurrence of a local or global disaster, not just an accident, a notification of the occurrence of the disaster in addition to the rescue signal may be provided to a disaster-related agency, thereby inducing a broad range of responses.

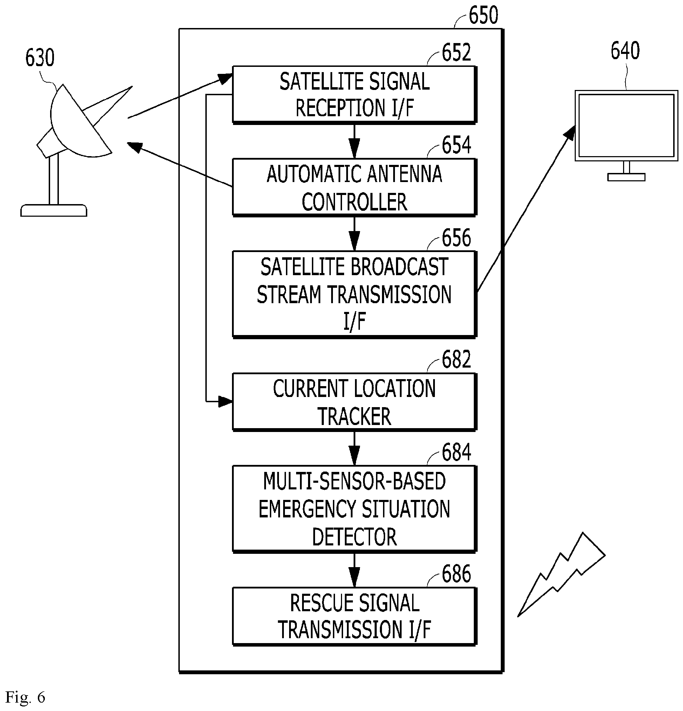

FIG. 6 is a diagram showing an apparatus including a smart satellite antenna capable of detecting an emergency situation and transmitting a rescue signal based on multi-sensing according to an embodiment of the present invention.

Referring to FIG. 6, there is shown an embodiment in which the functions of the emergency control box 580 of FIG. 5 are integrated with the controller 650.

The actual configuration and operation of this apparatus are not significantly different from those of FIG. 5. For example, the functions and operations of the apparatus are the same as those of the current location tracker 582, the multi-sensor-based emergency situation detector 584 and the rescue signal transmission interface 586 of FIG. 5 except that the current location tracker 682, the multi-sensor-based emergency situation detector 684, and the rescue signal transmission interface 686 of FIG. 6 are not installed in a separate emergency control box 580 but are integrated with the controller 650. Accordingly, redundant descriptions thereof are omitted.

In the same manner, the functions of the satellite signal reception interface 652, automatic antenna controller 654, satellite broadcast stream transmission interface 656, and TV 640 of FIG. 6 are the same as the functions of the satellite signal reception interface 552, automatic antenna controller 554, satellite broadcast stream transmission interface 556, and TV 540 of FIG. 5. Accordingly, redundant descriptions thereof are omitted.

Although the smart antenna apparatus installed on a vehicle is illustrated in FIGS. 1 to 6, it will be apparent to those skilled in the art that the spirit of the present invention is directed to the technology that may be installed on a ship such as a yacht or on a movable vehicle and provide a multi-sensing-based emergency situation detection and rescue signal transmission function.

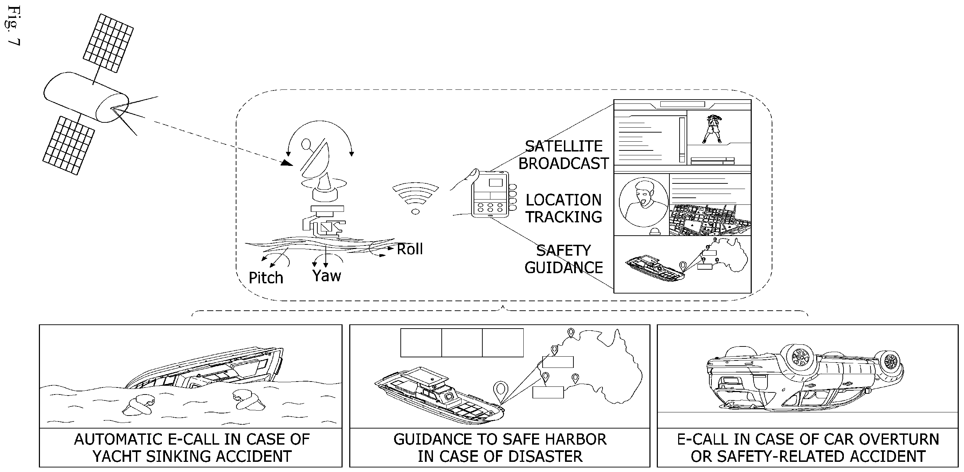

FIG. 7 is a diagram showing a vehicle or yacht accident detection and emergency rescue request system including a smart satellite antenna apparatus according to an embodiment of the present invention.

The satellite antenna apparatus of the present invention is installed on a vehicle including a camping car or a ship including a yacht and performs the function of receiving a satellite broadcast, and the multi-sensing-based emergency controller provided along with the satellite antenna detects emergency situations by detecting various types of environmental information. For example, an inertial sensor or a geomagnetic sensor may detect the collapse or inclination of a vehicle or a ship. In addition, the combination of a temperature sensor and a carbon dioxide sensor enables the occurrence of a fire to be detected by synthesizing an increase in temperature and an increase in the concentration of carbon dioxide.

Furthermore, through a microphone or the like may be collected acoustic information - an explosion sound, an impact sound at the time an object is turned over (overturned) or collapses, a scream of a person, a groan of a person, and an environmental sound that allows the occurrence of an earthquake, a landslide, a tsunami, a flooding, or the like to be estimated.

The method according to an embodiment of the present invention may be implemented in the form of program instructions, and may be then recorded in a computer-readable storage medium. The computer-readable storage medium may include program instructions, data files, and data structures solely or in combination. Program instructions recorded on the storage medium may have been specially designed and configured for the present invention, or may be known to or available to those who have ordinary knowledge in the field of computer software. Examples of the computer-readable storage medium include all types of hardware devices specially configured to record and execute program instructions, such as magnetic media, such as a hard disk, a floppy disk, and magnetic tape, optical media, such as compact disk (CD)-read only memory (ROM) and a digital versatile disk (DVD), magnetooptical media, such as a floptical disk, ROM, random access memory (RAM), and flash memory. Examples of the program instructions include machine code, such as code created by a compiler, and high-level language code executable by a computer using an interpreter. These hardware devices may be configured to operate as one or more software modules in order to perform the operation of the present invention, and the vice versa.

However, the present invention is not limited to the embodiments. Like reference symbols in the drawings designate like components. The lengths, heights, sizes, widths, etc. introduced in the embodiments and drawings of the present invention may be exaggerated to help to understand.

Although the present invention has been described with reference to specific details such as the specific components, and the limited embodiments and drawings, these are provided merely to help a general understanding of the present invention, and the present invention is not limited thereto. Furthermore, those having ordinary skill in the technical field to which the present invention pertains may make various modifications and variations from the above detailed description.

Therefore, the spirit of the present invention should not be defined based only on the described embodiments, and not only the attached claims but also all equivalent to the claims should be construed as falling within the scope of the spirit of the present invention.

### Industrial Applicability

Disclosed herein is a smart satellite antenna apparatus including a satellite tracking antenna. The smart satellite antenna apparatus includes a controller that receives a command to select a channel of a satellite broadcast from a user and controls the movement and rotation of the satellite tracking antenna corresponding to the channel of the satellite broadcast. The controller transfers satellite broadcast content, received corresponding to the channel, via a wired link so that the satellite broadcast content is displayed on a display device, sets up a multicasting network based on wireless links so that the satellite broadcast content is displayed on a plurality of wireless devices other than the display device via the wireless links, and manages the multicasting network so that the satellite broadcast content is transferred to each of the plurality of wireless devices via the multicasting network and the satellite broadcast content is shared among the display device and the plurality of wireless devices.

## Claims

1. A smart satellite antenna apparatus including a satellite tracking antenna, the smart satellite antenna apparatus comprising:
a controller configured to receive a command to select a channel of a satellite broadcast from a user and control movement and rotation of the satellite tracking antenna corresponding to the channel of the satellite broadcast;
wherein the controller is further configured to:
transfer satellite broadcast content, received corresponding to the channel, via a wired link so that the satellite broadcast content is displayed on a display device;
set up a multicasting network based on wireless links so that the satellite broadcast content is displayed on a plurality of wireless devices other than the display device via the wireless links; and
manage the multicasting network so that the satellite broadcast content is transferred to each of the plurality of wireless devices via the multicasting network and the satellite broadcast content is shared among the display device and the plurality of wireless devices.

2. The smart satellite antenna apparatus of claim 1, wherein the controller is further configured to adaptively determine whether to set up the multicasting network and perform designation of a plurality of wireless devices as multicasting targets based on interaction with the user.

3. The smart satellite antenna apparatus of claim 1, wherein the controller is further configured to:
recognize a plurality of wireless devices and set at least some of the plurality of wireless devices as one group;
set up a multicasting network assigning an identical bandwidth for a plurality of group wireless devices included in the one group; and
manage the multicasting network so that the plurality of group wireless devices share the multicasting network and receive the satellite broadcast content.

4. The smart satellite antenna apparatus of claim 1, wherein the controller is further configured to adjust a timing condition of a data stream transmitted to at least one of the display device and the plurality of wireless devices so that a difference between times at which the satellite broadcast content is played on the display device and the plurality of wireless devices falls within a reference value.

5. The smart satellite antenna apparatus of claim 1, wherein the controller is further configured to:
extract a command keyword from a voice command of the user based on an artificial intelligence speech recognition technology;
control an auto-tracking operation of the satellite tracking antenna corresponding to the channel of the satellite broadcast based on the command keyword; and
automatically determine whether to set up the multicasting network and perform designation of a plurality of wireless devices as multicasting targets based on the command keyword.

6. A method of operating a smart satellite antenna apparatus including a satellite tracking antenna, the method comprising:
receiving, by a controller, a command to select a channel of a satellite broadcast from a user and controlling, by the controller, movement and rotation of the satellite tracking antenna corresponding to the channel of the satellite broadcast;
transferring, by the controller, satellite broadcast content, received corresponding to the channel, via a wired link so that the satellite broadcast content is displayed on a display device;
setting up, by the controller, a multicasting network based on wireless links so that the satellite broadcast content is displayed on a plurality of wireless devices other than the display device via the wireless links; and
managing, by the controller, the multicasting network so that the satellite broadcast content is transferred to each of the plurality of wireless devices via the multicasting network and the satellite broadcast content is shared among the display device and the plurality of wireless devices.

7. The method of claim 6, further comprising recognizing, by the controller, a plurality of wireless devices and setting, by the controller, at least some of the plurality of wireless devices as one group;
wherein the setting up comprises setting up a multicasting network assigning an identical bandwidth for a plurality of group wireless devices included in the one group; and
wherein the managing comprises managing the multicasting network so that the plurality of group wireless devices share the multicasting network and receive the satellite broadcast content.

8. The method of claim 6, further comprising adjusting, by the controller, a timing condition of a data stream transmitted to at least one of the display device and the plurality of wireless devices so that a difference between times at which the satellite broadcast content is played on the display device and the plurality of wireless devices falls within a reference value.

9. A smart satellite antenna apparatus including a satellite tracking antenna, the smart satellite antenna apparatus comprising:
a controller configured to receive a command to select a channel of a satellite broadcast from a user and control movement and rotation of the satellite tracking antenna corresponding to the channel of the satellite broadcast; and
an emergency controller including a multi-sensor having a nearby voice and sound recognition function, and configured to detect an emergency situation and transmit a rescue signal corresponding to the emergency situation via an external communication network when the emergency situation is detected;
wherein the emergency controller is further configured to:
detect whether the emergency situation has occurred based on a detection result of the multi-sensor;
when the emergency situation is detected, track a current location determined from an operation of the satellite tracking antenna; and
when the emergency situation is detected, check a nearby available communication network and transmit the rescue signal corresponding to the emergency situation using the available communication network.

10. The smart satellite antenna apparatus of claim 9, wherein the emergency controller is further configured to:
recognize a pattern of nearby voice and sound detected by the multi-sensor and generate context information about a nearby situation; and
cross-check whether detection information detected by another element of the multi-sensor indicates the emergency situation based on the context information.

11. The smart satellite antenna apparatus of claim 9, wherein the emergency controller is installed in a case separate from hardware of the controller.

12. The smart satellite antenna apparatus of claim 9, wherein the emergency controller is integrated with hardware of the controller in a same case.

13. A method of operating a smart satellite antenna apparatus including a satellite tracking antenna, the method comprising:
receiving a command to select a channel of a satellite broadcast from a user and controlling movement and rotation of the satellite tracking antenna corresponding to the channel of the satellite broadcast;
detecting whether an emergency situation has occurred based on multi-sensing information detected by a multi-sensor having a nearby voice and sound recognition function;
when the emergency situation is detected, tracking a current location determined from an operation of the satellite tracking antenna; and
when the emergency situation is detected, checking a nearby available communication network and transmitting a rescue signal corresponding to the emergency situation using the available communication network.

14. The method of claim 13, wherein the detecting comprises:
recognizing a pattern of nearby voice and sound detected by the multi-sensor, and generating context information about a nearby situation; and
cross-checking whether detection information detected by another element of the multi-sensor indicates the emergency situation based on the context information.
